Europäisches Patentamt

**European Patent Office**

Office européen des brevets

(11) Numéro de publication: **0 306 361**
**B1**

(12) ## FASCICULE DE BREVET EUROPEEN

(45) Date de publication du fascicule du brevet:
28.11.90

(21) Numéro de dépôt: **88401919.1**

(22) Date de dépôt: **22.07.88**

(51) Int. Cl.⁵: **B60S 1/02**

(54) **Platine d'essuie-glace et ensemble essuie-glace-lave-glace comportant une telle platine.**

(30) Priorité: **03.08.87 FR 8711008**

(43) Date de publication de la demande:
**08.03.89 Bulletin 89/10**

(45) Mention de la délivrance du brevet:
**28.11.90 Bulletin 90/48**

(84) Etats contractants désignés:
**DE ES GB IT SE**

(56) Documents cités:
**DE-A- 2 330 096**
**FR-A- 2 066 476**
**FR-A- 2 322 028**
**US-A- 3 147 632**
**US-A- 3 158 293**
**US-A- 3 815 168**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Bordier, José, 8 rue Louis Aragon, F-25400 Audincourt(FR)**
Inventeur: **Rudi, Alain, 3 rue Collin, F-90000 Essert(FR)**
Inventeur: **Peugeot, Michel, 7 Impasse Degas, F-25230 Seloncourt(FR)**
Inventeur: **Betencourt, Joseph, 14A rue des Vignes, F-25150 Autechaux Roide(FR)**

(74) Mandataire: **Mestre, Jean et al, c/o CABINET LAVOIX 2, place d'Estienne d'Orves, F-75441 Paris Cédex 09(FR)**

ACTORUM AG

## Description

Tous les véhicules automobiles actuellement fabriqués comportent non seulement un dispositif d'essuie-glace, mais également un lave-glace permettant de nettoyer la vitre et notamment le pare-brise chaque fois que cela est nécessaire et d'assurer ainsi au conducteur une visibilité correcte quelles que soient les conditions atmosphériques.

Or, même dans les véhicules de haut de gamme, les différents constituants des dispositifs d'essuie-glace et de lave-glace sont dispersés et plus ou moins éloignés les uns des autres (voir par exemple US-A 3 158 293), ce qui, en obligeant à les monter séparemment et à effectuer leur assemblage fonctionnel sur la chaîne de montage du véhicule en plusieurs opérations, entraîne une perte de temps et un accroissement du coût de l'ensemble.

La présente invention a pour but de remédier à ces inconvénients en fournissant une platine de support d'essuie-glace qui soit susceptible de supporter à la fois les éléments essentiels du dispositif d'essuie-glace et ceux du lave-glace et permette un assemblage rapide dans le véhicule.

Cette invention a en effet pour objet une platine de support d'essuie-glace caracterisée en ce qu'elle a une forme allongée et relativement étroite et plane et comporte, sur l'une de ses faces un palier d'axe de commande d'essuie-glace qui la traverse, des moyens de fixation d'une pompe de lave-glace et des moyens de montage d'un moteur d'essuie-glace, et, au moins à ses extrémités, des moyens de fixation sur le véhicule.

Une telle platine est de préférence realisée en matière plastique moulée par injection et comporte d'une part un palier permettant le support d'un axe de commande qui la traverse et d'autre part un trou de passage de l'arbre de sortie du moteur d'essuie-glace.

L'invention s'étend également à un ensemble essuie-glace - lave-glace comportant une platine de support d'essuie-glace de type ci-dessus qui est équipée, sur l'une de ses faces d'un palier de support d'un axe de commande d'essuie-glace, d'une pompe de lave-glace, d'un axe de commande d'essuie-glace la traversant et d'un moteur électrique d'essuie-glace dont l'arbre de sortie traverse également la platine et, sur son autre face, d'une tringlerie reliant l'arbre de sortie du moteur à l'extrémité de l'axe de commande.

De préférence les moyens de fixation de la platine sur le véhicule sont formés par des bossages creux formant écarteurs entre la platine et l'organe sur laquelle elle est montée.

La description ci-dessous d'un mode de réalisation donné à titre d'exemple non limitatif et représenté aux dessins annexés fera d'ailleurs ressortir les avantages et caractéristiques de l'invention.

Sur ces dessins:

- la Fig. 1 est une vue de dessus de la platine de support d'essuie glace,
- la Fig. 2 est une vue en élévation suivant la flèche F de la Fig. 1, avec arrachement partiel,
- la Fig. 3 est une vue en coupe suivant la ligne 3-3 de la Fig. 1,

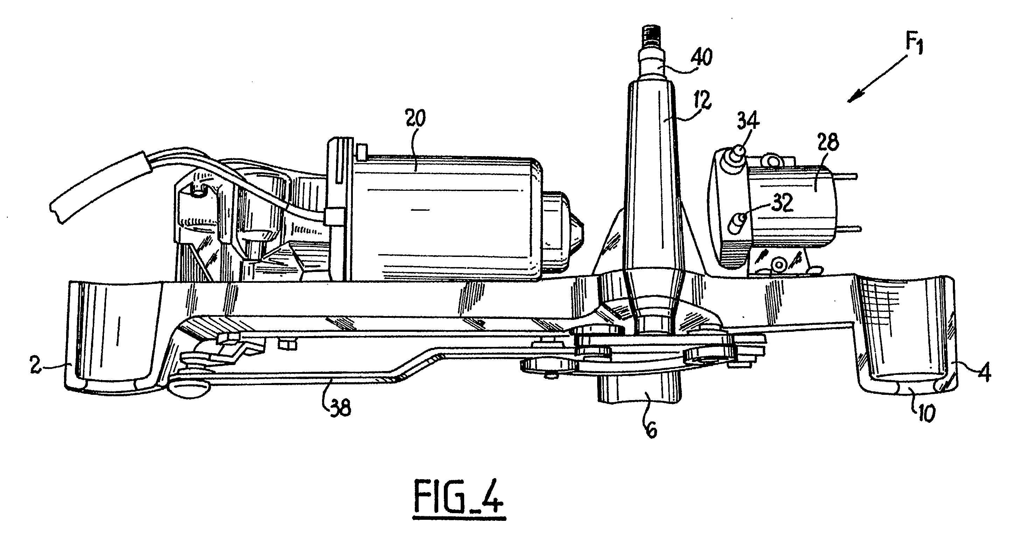

- la Fig. 4 est une vue en perspective d'un ensemble essuie-glace - lave-glace selon l'invention, vu de côté;

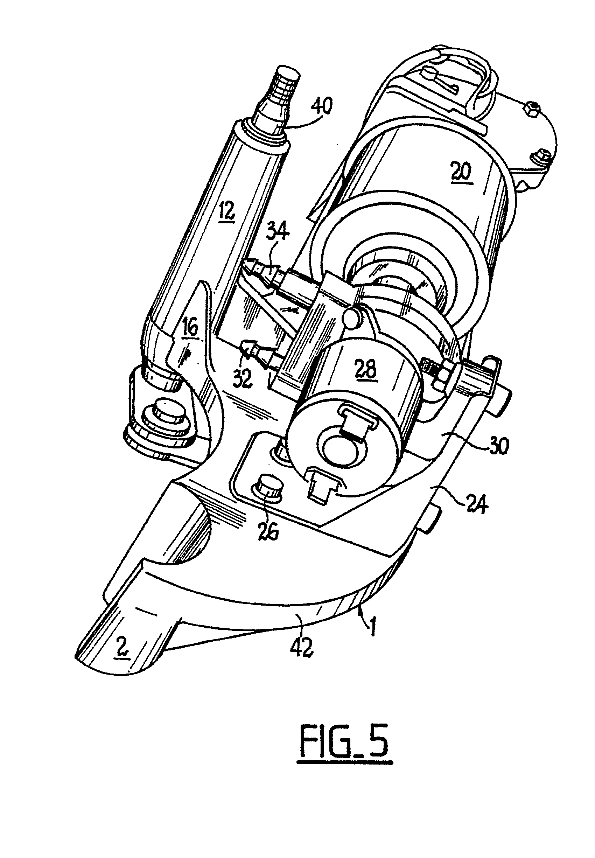

- la Fig. 5 est une vue en perspective de l'ensemble de la Fig. 4 vu selon la flèche F₁ de la Fig. 4.

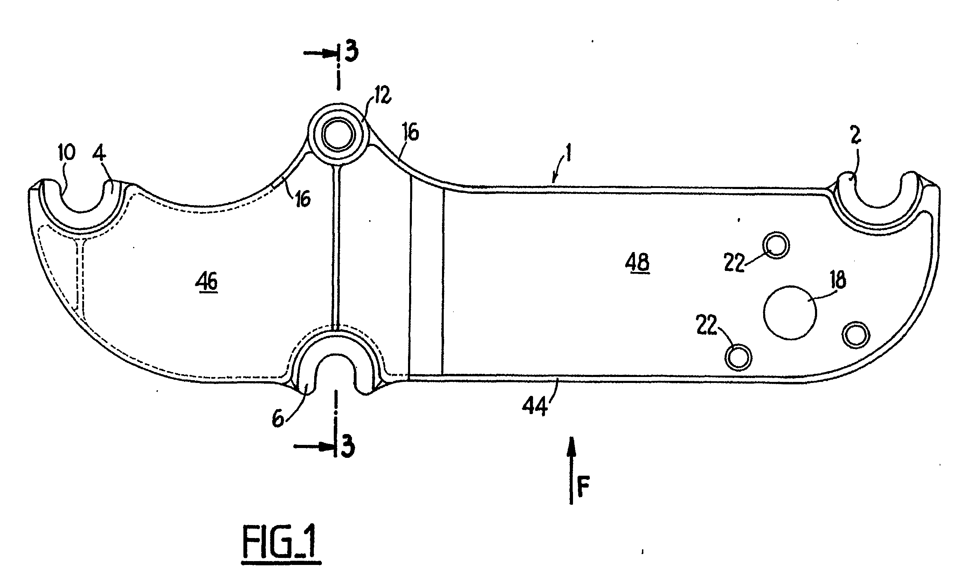

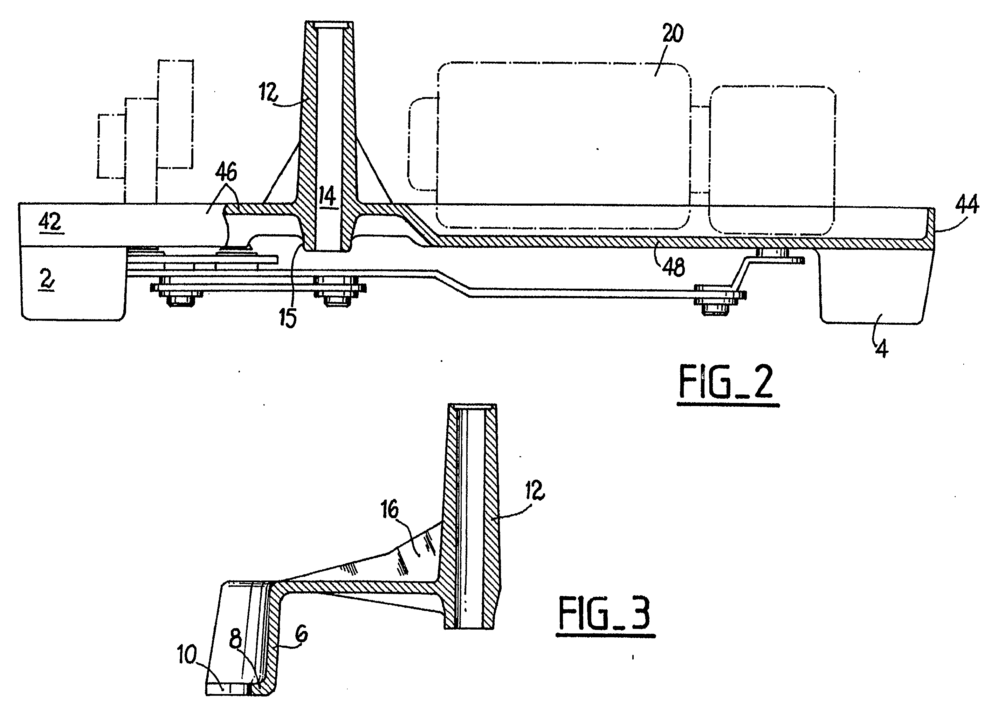

Comme le montre les dessins et tout particulièrement les Figs. 1 et 2, la platine 1 a une forme allongée relativement étroite et comporte au moins à ses deux extrémités, et de préférence également en un point intermédiaire, des moyens de fixation sur le véhicule qui, dans le mode de réalisation représenté, sont constitués par des bossages semi-circulaires respectivement 2, 4 et 6. Ces bossages sont creux mais comportent à leur extrémité la plus éloignée de la platine un fond 8 percé d'un orifice 10 de passage d'un organe de fixation tel qu'une vis, un boulon ou autre.

En un point intermédaire de sa longueur la platine 1 comporte une saillie tubulaire 12 qui entoure un trou traversant 14 et constitue sur l'une des faces de la platine 1 un fourreau ou palier de guidage pour un axe de commande d'essuie-glace. De préférence, comme le montre la Fig. 2, la saillie 12 se prolonge légèrement en 15 sur la face opposée de la platine pour renforcer le guidage de l'axe. Le fourreau 12 est de préférence formé, comme représenté, sur l'un des bords de la platine 1 et il est renforcé par deux ailettes 16 à sa partie inférieure.

La platine 1 est par ailleurs percée au voisinage de l'une de ses extrémités d'un trou 18 destiné au passage de l'arbre de sortie d'un moteur d'essuie-glace 20 qui peut être fixé sur elle par tous moyens appropriés et notamment au moyen de vis ou analogues traversant des trous 22, trois dans le mode de réalisation représenté, percés autour du trou 18 à égale distance de celui-ci.

A son extrémité opposée, c'est à dire de l'autre côté du fourreau palier 12, la platine 1 porte des moyens de fixation d'une pompe de lave-glace qui dans le mode de réalisation représenté sont constitués par une ferrure en L 24, fixée sur la platine 1 au moyen de vis 26 mais qui pourraient bien entendu être réalisés comme la platine 1 en matière plastique et être d'une seule pièce avec elle.

La platine 1 peut ainsi aisement supporter une pompe de lave-glace 28 qui est montée sur la ferrure 24 par l'intermédiaire d'un bras 30 et comporte deux embouts 32 et 34 respectivement d'entrée et de sortie du liquide de nettoyage de la vitre. La pompe 28 est montée de manière que ces embouts 32 et 34 qui sont parallèles l'un à l'autre, débouchent à proximité du palier de guidage 12 en direction du bord correspondant de la platine.

La pompe 28 se trouve ainsi à une faible distance du moto-réducteur 20 d'essuie-glace dont l'arbre de sortie traverse le trou 18. Cet arbre est assemblé, sur la face opposée de la platine, à une tringlerie ou embiellage, 38 qui le relie à un axe 40 de commande d'essuie-glace monté dans le foureau 12 qui constitue un palier de guidage pour cet arbre.

On obtient ainsi un ensemble compact de commande d'essuie-glace et de lave-glace dont l'encombrement est faible et qui peut facilement être monté en une seule opération dans le véhicule, et par suite être installé automatiquement par exemple au moyen d'un robot. Il est clair en effet que la seule fixation de la platine 1 par l'intermédiaire de ses bossages 2, 4 et 6 assure la mise en place des éléments essentiels des dispositifs d'essuie-glace et de lave-glace. Les connections électriques du moteur 20 et de la pompe de lave glace 28 peuvent ensuite être effectuées très simplement de même que la liaison de l'embout d'entrée 32 au circuit de liquide de lavage. Lors de ce montages les bossages 2, 4 et 6 jouent le role d'écarteurs assurant un positionnement correcte de l'ensemble. Ils ont en effet une hauteur telle qu'ils ménagent automatiquement entre le véhicule et la platine un espace suffisant pour le libre fonctionnement de l'embiellage.

Un tel sous ensemble est adapté à être monté directement devant le pare-brise d'un véhicule, l'axe 40 portant le bras d'essuie-glace, ce qui permet de raccourcir considérablement les conduits hydrauliques du lave-glace. Il est même possible de munir l'embout de sortie 34 d'un gicleur agissant directement sur la vitre à nettoyer.

De préférence, comme le montrent les dessins, la platine 1 est renforcée sur toute sa périphérie par un rebord qui au voisinage de la pompe de lave-glace 28 est dirigé vers le bas en 42, tandis que dans la région du moto-réducteur d'essuie glace 20 il est dirigé vers le haut en 44. Les deux parties correspondantes, respectivement 46 et 48, de la platine 1 sont alors de préférence décalées l'une par rapport à l'autre de la hauteur de ces rebords de sorte que l'encombrement général de la platine est réduite à un minimum.

Cette platine est réalisée en matière plastique par exemple moulée par injection et il apparaîtra clairement que les carters de la pompe 28 et du motoréducteur 20 peuvent, si désiré, être au moins partiellement moulés d'une seule pièce avec elle, ce qui réduit encore le nombre des opérations d'assemblage.

**Revendications**

1. Platine de support d'essuie-glace, caractérisée en ce qu'elle a une forme allongée, relativement étroite et plane, et comporte, sur l'une de ses faces, un palier (12) pour un axe (40) de commande d'essuie-glace qui la traverse, des moyens (24, 26) de fixation d'une pompe de lave-glace (28) et des moyens (22) de fixation d'un moteur d'essuie-glace (20) et, au moins à ses extrémités, des moyens (4) de fixation sur le vehicule.

2. Platine suivant la revendication 1, caractérisée en ce qu'elle comporte, sur sa face opposée aux moyens (22, 24, 26) de fixation de la pompe de lave-glace et du moteur d'essuie-glace, des bossages (2, 4, 6) d'espacement et de fixation sur le véhicule.

3. Platine suivant l'une des revendications 1 et 2, caractérisée en ce qu'elle est réalisée en matière plastique moulée par injection.

4. Platine suivant l'une des revendications précédentes, caractérisée en ce que les moyens de fixation de la pompe de lave-glace (28) comporte une ferrure en L (24) fixée sur la platine (1).

5. Platine suivant la revendication 3, caractérisée en ce que les moyens de fixation d'une pompe de lave-glace (28) sont constitués par un support (24) venu de matière avec la platine elle-même.

6. Platine suivant l'une des revendications précédentes, caractérisée en ce qu'elle comporte au droit des moyens (22) de fixation du moteur d'essuie-glace un orifice (18) de libre passage de l'arbre de sortie de ce moteur.

7. Platine suivant l'une des revendications précédentes, caractérisée en ce qu'elle comporte deux parties parallèles (46, 48) légèrement décalées l'une par rapport l'autre et entourées par des rebords de renforcement (42, 44) dirigés en sens inverse.

8. Platine suivant l'une des revendications précédentes, caractérisée en ce que le palier (12) est constitué par un fourneau allongé qui traverse la platine.

9. Ensemble essuie-glace - lave-glace, caractérisé en ce qu'il comporte une platine suivant l'une des revendications précédentes qui est équipée sur l'une de ses faces d'un palier (12) de support d'un axe de commande d'essuie-glace, d'une pompe (28) de lave-glace et d'un moteur électrique (20) d'essuie-glace dont l'arbre de sortie traverse la platine, et, sur sa face opposée d'une tringlerie reliant l'arbre de sortie du moteur à l'extrémité de l'axe de commande d'essuie glace (40).

10. Ensemble essuie-glace, lave-glace suivant la revendication 9, caractérisé en ce que la pompe de lave-glace (28) comporte deux embouts parallèles superposés (32, 34) respectivement d'entrée et de sortie du liquide de lave-glace, l'embout de sortie (34) formant un gicleur calibré.

**Patentansprüche**

1. Tragplatine für Scheibenwischer, dadurch gekennzeichnet, daß sie eine längliche, relativ schmale und ebene Form hat und auf einer ihrer Seiten ein Lager (12) für eine sie durchquerende Achse (40) zum Antrieb des Scheibenwischers, Einrichtungen (24, 26) zur Befestigung einer Scheibenwaschpumpe (28) und Einrichtungen (22) zur Befestigung eines Scheibenwischmotors (20) und mindestens an ihren Enden Einrichtungen (4) zur Befestigung an dem Fahrzeug besitzt.

2. Platine nach Anspruch 1 dadurch gekennzeichnet, daß sie an ihrer den Einrichtungen (22, 24, 26) zur Befestigung der Scheibenwaschpumpe und des Scheibenwischmotors Erhebungen (2, 4, 6) zum Abstandhalten und zur Befestigung an dem Fahrzeug besitzt.

3. Platine nach einem der vorhergehenden Ansprüche, dadurch gekennzeichnet, daß sie aus im Spritzguß geformtem Kunststoff besteht.

4. Platine nach einem der vorhergehenden Ansprüche, dadurch gekennzeichnet, daß die Einrichtungen zur Befestigung der Scheibenwaschpumpe (28) einen L-förmigen Beschlag (24) aufweisen, der an der Platine (1) befestigt ist.

5. Platine nach Anspruch 3, dadurch gekennzeichnet, daß die Einrichtungen zur Befestigung der Scheibenwaschpumpe (28) aus einem mit der Platine aus einem Stück gegossenen Halter (24) bestehen.

6. Platine nach einem der vorhergehenden Ansprüche, dadurch gekennzeichnet, daß sie an der Stelle der Einrichtungen (22) zur Befestigung des Scheibenwischmotors eine Öffnung (18) für den freien Durchgang der Ausgangswelle dieses Motors besitzt.

7. Platine nach einem der vorhergehenden Ansprüche, dadurch gekennzeichnet, daß sie zwei zueinander parallele und gegeneinander leicht versetzte Teile (46, 48) besitzt, die von einander entgegengesetzt gerichteten abgewinkelten Verstärkungsrändern (42, 44) umgeben sind.

8. Platine nach einem der vorhergehenden Ansprüche, dadurch gekennzeichnet, daß das Lager (12) aus einer langgestreckten, die Platine durchquerenden Buchse besteht.

9. Scheibenwisch-Scheibenwasch-Einheit, gekennzeichnet durch eine Platine nach einem der vorhergehenden Ansprüche, die an einer ihrer Seiten mit einem Lager (12) für eine Achse zum Antrieb des Scheibenwischers, einer Scheibenwaschpumpe (28) und einem elektrischen Scheibenwischmotor (20), dessen Ausgangswelle die Platine durchquert, und auf ihrer entgegengesetzten Seite mit einem Gestänge ausgerüstet ist, das die Ausgangswelle des Motors mit dem Ende der Achse (40) zum Antrieb des Scheibenwischers verbindet.

10. Scheibenwisch-Scheibenwasch-Einheit nach Anspruch 9, dadurch gekennzeichnet, daß die Scheibenwaschpumpe (28) zwei parallele, übereinander angeordnete Nippel (32, 34) für den Eingang bzw. den Ausgang der Scheibenwaschflüssigkeit besitzt, wobei der Ausgangsnippel (34) eine kalibrierte Düse bildet.

**Claims**

1. Support plate for a windscreen wiper characterized in that it has a relatively narrow and planar elongated shape and comprises, on one of its sides, a bearing (12) for a windscreen wiper control shaft (40) which extends through the bearing, means (24, 26) for fixing a windscreen washer pump (28), means (22) for fixing a windscreen wiper motor, and means (4) for fixing the plate on a vehicle at least at the ends of the plate.

2. Plate according to claim 1, characterized in that it comprises on the side of the plate opposite to the means (22, 24, 26) for fixing the windscreen washer pump and the windscreen wiper motor, bosses (2, 4, 6) for fixing the plate on the vehicle and spacing the plate from the vehicle.

3. Plate according to claim 1 or 2, characterized in that it is made from an injection moulded plastics material.

4. Plate according to any one of the preceding claims, characterized in that the means for fixing the windscreen washer pump (28) comprise an L-shaped bracket (24) fixed to the plate (1).

5. Plate according to claim 3, characterized in that the means for foxing the windscreen washer pump (28) comprise a support (24) which is made in one piece with the plate.

6. Plate according to any one of the preceding claims, characterized in that it comprises, in the region of the means (22) for fixing the windscreen wiper motor, an aperture (18) for the free passage of the output shaft of the motor.

7. Plate according to any one of the preceding claims, characterized in that it comprises two parallel portioins (46, 48) which are slightly offset relative to each otehr and surrounded by reinforcing flanges (42, 44) extending in opposite directions.

8. Plate according to any one of the preceding claims, characterized in that the bearing (12) is constituted by an elongated bushing which extends through the plate.

9. Windscreen wiper-windscreen washer unti comprising a plate according to any one of the preceding claims provided, on one of the sides of the plate, with a support bearing (12) for a windscreen wiper control shaft, a windscreen washer pump (28) and a windscreen wiper electric motor (20) whose output shaft extens through the plate, and, on the opposite side of the plate, with a linkage connecting the output shaft of the motor to the end of the windscreen wiper control shaft.

10. Windscreen wiper-windscreen washer unit according to claim 9, characterized in that the windscreen washer pump (28) comprises two superimposed parallel terminal members (32, 34) respectively for the inlet and outlet of windscreen washing liquid, the outlet terminal member (34) constituting a calibrated jet.

FIG.1

EP 0 306 361 B1

**FIG_2**

**FIG_3**

FIG_4

## FIG. 5